# EUROPÄISCHE PATENTSCHRIFT

(11) **EP 3 150 047 B1**
(45) Veröffentlichungstag und Bekanntmachung des Hinweises auf die Patenterteilung: **05.08.2026**
(21) Anmeldenummer: 16176469.1
(22) Anmeldetag: 27.06.2016
(51) Int. Cl.: A01D 41/127

(54) **VERFAHREN ZUM ERKENNEN VON STÖRUNGEN EINER ERNTEGUTBERGUNGSANORDNUNG**
METHOD FOR DETECTING DISTURBANCES OF A CROP HARVESTING ASSEMBLY
PROCEDE DE RECONNAISSANCE DE PANNES D'UN SYSTEME DE SAUVETAGE DE RECOLTE

(30) Priorität: 30.09.2015 DE 102015116572
(43) Veröffentlichungstag der Anmeldung: 05.04.2017
(73) Patentinhaber: CLAAS Selbstfahrende Erntemaschinen GmbH, 33428 Harsewinkel (DE)
(72) Erfinder: Nienhaus, Andreas, 48155 Münster (DE); Roth, Michaela, 33619 Bielefeld (DE)
(74) Vertreter: CLAAS Gruppe

(56) Entgegenhaltungen:
- EP-A1- 2 143 316
- WO-A1-2014/093814
- WO-A1-2014/156909

## Beschreibung

Die Erfindung betrifft ein Verfahren zum Erkennen von Störungen einer Erntegutbergungsanordnung gemäß dem Oberbegriff von Anspruch 1.

Landwirtschaftliche Erntemaschinen aus dem Stand der Technik, wie etwa Mähdrescher, weisen Erntegutbergungsanordnungen auf, mit denen Erntegut aufgenommen und der weiteren Verarbeitung zugeführt werden soll. Solche Erntegutbergungsanordnungen ihrerseits weisen regelmäßig eine Vielzahl von einzelnen Vorrichtungen auf, welche mit unterschiedlichen Parametern betrieben werden können. So können bei Erntegutbergungsanordnungen von Mähdreschern etwa die Schnitthöhe, Position und Drehzahl der Haspel sowie die Bewegung der Querförderschnecke und des Schrägförderers eingestellt werden. Ebenso bestimmt die Fahrgeschwindigkeit der Erntemaschine die Menge an von der Erntegutbergungsanordnung aufgenommenem Erntegut.

Je nach Einstellung der Erntegutbergungsanordnung sowie Art, Menge und Eigenschaften des aufgenommenen Ernteguts kann es zu unterschiedlichen Arten von Störungen in dem Betrieb der Erntegutbergungsanordnung kommen. Ein bekanntes Beispiel hierfür ist das Auftreten eines Erntegutstaus in dem Schneidwerk eines Mähdreschers. Ist so ein Erntegutstau erst voll ausgebildet, muss der Erntevorgang abgebrochen und eine aufwändige Auflösung des Erntegutstaus vorgenommen werden. Die hierfür erforderliche Zeit beeinträchtigt die Wirtschaftlichkeit des Betriebs des Mähdreschers ernstlich. In der Regel tritt ein solcher Erntegutstau - oder treten auch andere Störungen von Erntegutbergungsanordnungen - nicht plötzlich auf, sondern bildet bzw. bilden sich über eine längere Zeit aus, bis es zur vollständigen Stauung kommt, welche eine vollständige Unterbrechung des Betriebs erfordert. Ein Problem dabei ist, dass erst die vollständige Stauung ohne Weiteres und deutlich erkennbar ist, es dann aber für eine Korrektur des Betriebs der Erntegutbergungsanordnung, welche auch ohne eine Unterbrechung ausgekommen wäre, schon zu spät ist. Daher besteht das Bestreben, einen solchen sich anbahnenden Erntegutstau oder eine andere Störung bereits frühzeitig zu erkennen, sodass durch geeignete Reaktionsmaßnahmen, wie etwa einer vorübergehenden Verringerung des aktuellen Erntegutdurchsatzes, der sich anbahnende Erntegutstau verhindert werden kann, ohne dass es die Unterbrechung des Erntebetriebs erfordert.

Die Offenlegungsschrift DE 10 2008 032 191 A1, welche vorliegend als nächstkommend angesehen wird, beschreibt eine selbstfahrende Erntemaschine mit einer Sensoreinheit zur Überwachung des Erntegutstroms innerhalb eines Erntegutbergungsvorsatzes der Erntemaschine. Speziell ist eine Kamera vorgesehen, welche Bilder des Erntegutstroms erstellt. Diese Bilder werden einem Bildvergleichsverfahren unterzogen, bei dem die erstellten Bilder von dem Erntegutstrom mit Referenzbildern verglichen werden. Durch einen solchen makroskopischen Vergleich des aktuellen Bildes mit dem Referenzbild kann ermittelt werden, ob eine Abweichung des aktuellen Erntegutstroms von dem unbedenklichen Erntegutstrom gemäß dem Referenzbild vorliegt. Dabei macht man sich den Umstand zunutze, dass bei einer erhöhten Menge an Erntegut in dem aktuellen Bild bereits bei makroskopischer Betrachtung Unterschiede auftreten werden, so etwa bezüglich Anteil und Verteilung heller gegenüber dunkler Helligkeitsbereiche in den beiden Bildern etc..

Nachteilig an diesem Ansatz ist, dass er nur auf das prinzipielle Vorhandensein eines Unterschieds zwischen dem Referenzbild und dem aktuellen Bild auf makroskopischer Ebene abstellt. Einerseits ist dies zu unspezifisch, da ein solcher Unterschied bei unterschiedlichen Störungsszenarien auftreten kann, welche zwar prinzipiell alle durch das Vorhandensein eines erfassbaren Unterschieds erkannt werden können, welche aber zu ihrer Vermeidung oder Behebung ein jeweils anderes und ggf. gegensätzliches Korrekturverhalten erfordern. Insofern kann es sein, dass die vorgesehene Reaktion auf den detektierten Unterschied das Problem nicht löst, sondern es gar verschärft. Ebenso ist an dem Ansatz aus dem Stand der Technik nachteilig, dass es auch Störungen gibt, die anhand eines solchen makroskopischen Bildvergleichs nicht oder jedenfalls nicht frühzeitig genug erkannt werden können. Aus der EP 2 143 316 ist zudem eine Detektionseinrichtung bekannt geworden, welche mittels Bildauswertung Gutstauprobleme in einem Erntegutbergungsvorsatz detektiert und sodann Maßnahmen einleitet, die diesen erkannten Gutstaueffekten entgegenwirkt. In EP 2 143 316 wird vorgeschlagen, diesen Gutstaueffekt dadurch zu beheben, dass der Gutfluss im Erntebergungsvorsatz und damit der Erntegutdurchsatz erhöht wird. Eine derartige Lösung hat den Nachteil, dass Gutstaueffekt aufgrund hoher Erntegutdurchsätze noch verstärkt werden würden.

Vor diesem Hintergrund besteht die Aufgabe der vorliegenden Erfindung darin, das aus dem Stand der Technik bekannte Verfahren zum Erkennen von Störungen einer Erntegutbergungsanordnung hinsichtlich der Genauigkeit, Zuverlässigkeit und Rechtzeitigkeit weiterzuentwickeln und zu verbessern.

Das obige Problem wird bei einem Verfahren zum Erkennen von Störungen einer Erntegutbergungsanordnung mit den Merkmalen des Oberbegriffs von Anspruch 1 durch die Merkmale des kennzeichnenden Teils von Anspruch 1 gelöst.

Wesentlich für die Erfindung ist die Erkenntnis, dass der Aufschluss über die Bewegung einzelner Objekte in dem Erntegutstrom ein zuverlässiges Indiz zur frühzeitigen Erkennung von Störungen der Erntegutbergungsanordnung sein kann. Anstelle eines makroskopischen Vergleichs zwischen Bildern insgesamt erfolgt also eine Betrachtung gleichsam auf mikroskopischer Ebene, nämlich eines - bezogen auf den aufgenommenen Bildbereich insgesamt - kleinen Teils oder Ausschnitts des Bildes. Diese besagte Erkenntnis wiederum stützt sich darauf, dass in erster Näherung die Bewegung von unterschiedlichen Objekten im Erntegutstrom eher von den makroskopischen Eigenschaften des Erntegutstroms und ggf. der Position innerhalb des Erntegutstroms abhängt als davon, ob das entsprechende Objekt zu dem Korngut gehört oder nur einen sonstigen Bestandteil des Ernteguts bildet. Es kommt also weniger darauf an, eine bestimmte Art von Objekt in dem Erntegut zu identifizieren, als vielmehr darauf, überhaupt ein Objekt in dem Erntegut zu erfassen, welches optisch so markant ist, dass seine Bewegung in dem Erntegutstrom nachvollzogen werden kann. Jedenfalls für die in der Umgebung dieses Objekts befindlichen weiteren Bestandteile des Erntegutstroms kann dann gefolgert werden, dass deren Bewegung mit derjenigen des erfassten Objekts stark korreliert ist.

Weiter fließt erfindungsgemäß die Bewegung des Objekts hinsichtlich des Geschwindigkeitsbetrags einerseits und der Richtung andererseits und auch eine jeweilige Änderung dieser Größen in die Beurteilung ein.

Die bevorzugte Ausgestaltung des Unteranspruchs 3 stellt zur Bestimmung der Bewegung des Objekts in dem Erntegutstrom auf ein optisches Erkennungsmerkmal des Objekts ab, wobei gemäß dem Unteranspruch 4 die Bestimmung des Objekts logisch nachgeordnet zum Auffinden des optischen Erkennungsmerkmals erfolgt. Dabei kann - gemäß dem Unteranspruch 5 - eine dahingehende Untersuchung des vollständigen Erntegutstroms oder Teilen davon erfolgen.

Zur Bestimmung der Bewegung des Objekts schlägt der Unteranspruch 6 die hinsichtlich der erforderlichen Rechenleistung besonders effiziente Bestimmung der Verschiebung eines einzelnen Bildpunktes des Objekts bzw. des Erkennungsmerkmals vor.

Die bevorzugten Ausgestaltungen der Unteransprüche 7 bis 9 betreffen die Betrachtung einer Vielzahl von Objekten im Erntegutstrom. Durch eine solche erweiterte Betrachtung kann sowohl die Häufigkeit, mit der markante Erkennungsmerkmale auftreten, als auch deren jeweilig bestimmte Bewegung berücksichtigt und miteinander in Bezug gesetzt werden.

Der Unteranspruch 10 sieht ferner die Ermittlung eines optischen Flusses für einen Teil des erfassten Erntegutstroms oder für den erfassten Erntegutstrom insgesamt vor.

Schließlich betreffen die Unteransprüche 11 und 12 bevorzugte Ausgestaltungen der Kameraanordnung zur Erfassung des Erntegutstroms.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig.1: eine schematische Vorderansicht auf eine Erntegutbergungsanordnung eines Mähdreschers zur Ausführung des vorschlagsgemäßen Verfahrens,
- Fig. 2a-c: drei zeitversetzte Aufnahmen des Erntegutstroms an der Erntegutbergungsanordnung der Fig. 1 bei der Ausführung des vorschlagsgemäßen Verfahrens und
- Fig. 3: einen Verlauf einer Durchschnittsgeschwindigkeit des Erntegutstroms an der Erntegutbergungsanordnung der Fig. 1, welcher bei einer Ausführung des vorschlagsgemäßen Verfahrens ermittelt wurde.

Das vorschlagsgemäße Verfahren dient dem Erkennen von Störungen einer Erntegutbergungsanordnung 1. Die Erntegutbergungsanordnung 1 gehört einer landwirtschaftlichen Erntemaschine 2, bei der es sich in dem dargestellten Ausführungsbeispiel um einen Mähdrescher 3 handelt. Speziell umfasst die Erntegutbergungsanordnung 1 - bei welcher es sich hier um ein Schneidwerk 1a handelt - in an sich bekannter Weise ein Gehäuse 4, eine an Tragarmen verstellbar gelagerte Haspel 5, welche Haspel 5 die Zufuhr des Erntegutstroms 6 in das Schneidwerk 1a unterstützt und jeweils einem an den äußeren vorderen Kanten des Schneidwerks 1a angeordneten Halmteiler 7, der innerhalb des Erntegutstroms 6 die einzelnen Halme voneinander trennt, sodass eine Erntegasse entsteht. Das Schneidwerk 1a umfasst weiter einen mit oszillierenden Messerklingen ausgestatteten Messerbalken 8 und eine Querförderschnecke 9, welche das Erntegut zur Mitte des Schneidwerks 1a hin zusammenführt und an einen Schrägförderer 10 übergibt, wobei der Schrägförderer 10 selbst nicht mehr zum Schneidwerk 1a im engeren Sinne zählt.

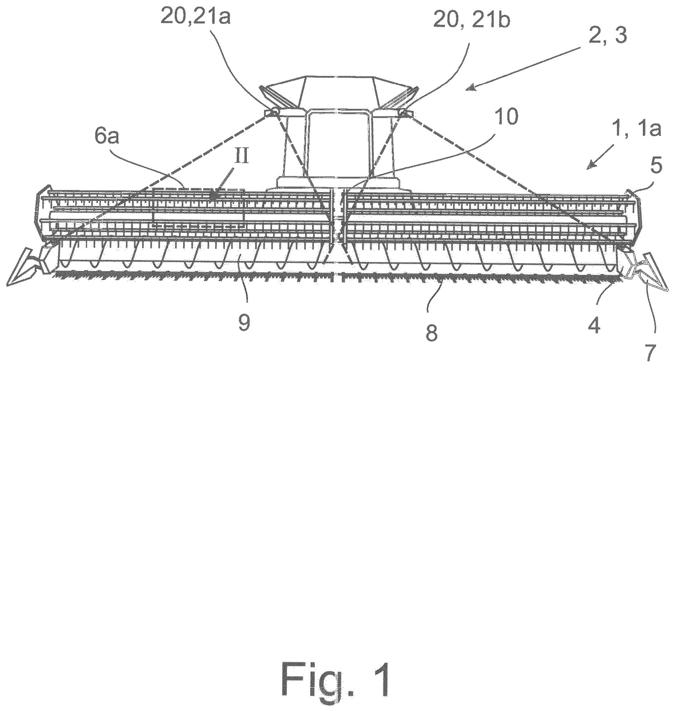

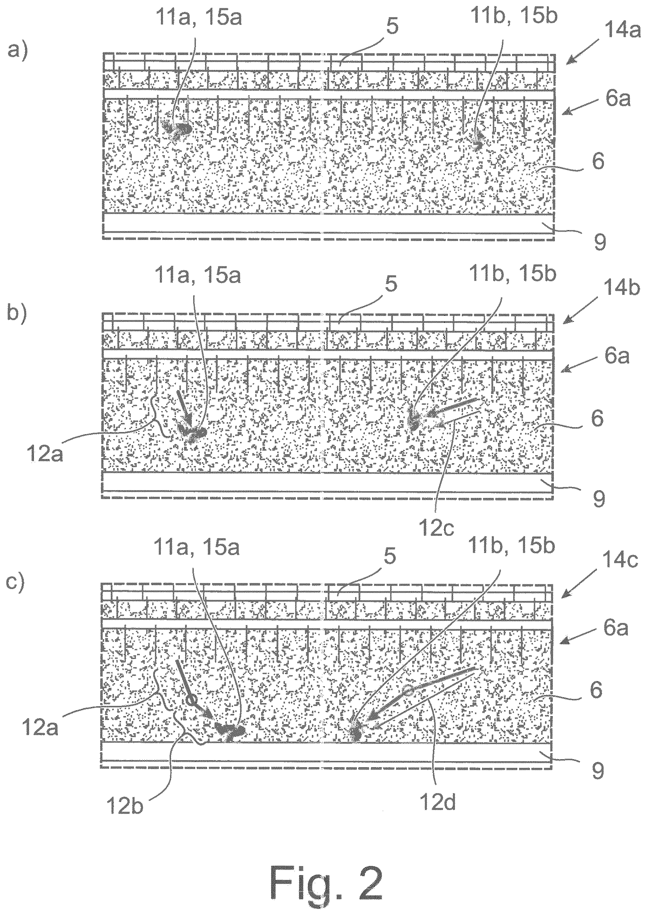

Bei dem vorschlagsgemäßen Verfahren wird der Erntegutstrom 6 an einer Erntegutbergungsanordnung 1 der landwirtschaftlichen Erntemaschine 2 optisch erfasst. Bei diesem Erntegutstrom 6 muss es sich nicht um den gesamten von der Erntegutbergungsanordnung 1 verarbeiteten Erntegutstrom 6 handeln, vielmehr wird es sich regelmäßig und bevorzugt um einen Teil des gesamten von der Erntegutbergungsanordnung 1 verarbeiteten Erntegutstrom 6 handeln und speziell um denjenigen Teil des Erntegutstroms 6, welcher durch einen Erfassungsbereich 6a bewegt wird. Das vorschlagsgemäße Verfahren ist nun dadurch gekennzeichnet, dass in dem optisch erfassten Erntegutstrom 6 die Bewegung in der Zeit eines Objekts 11a, b im Erntegutstrom 6 bestimmt wird und dass basierend auf der bestimmten Bewegung des Objekts 11a, b eine Störung der Erntegutbergungsanordnung erkannt 1 wird. Die Fig. 2a-c zeigen in diesem Zusammenhang jeweils eine beispielhafte Erfassung des Erntegutstroms 6 an dem in der Fig. 1 markierten Erfassungsbereich 6a der Erntegutbergungsanordnung 1. Beispielhaft sind zwei solche Objekte 11a, b in den Fig. 2a-c in ihrer Bewegung dargestellt.

Bevorzugt ist vorgesehen, dass die Bestimmung der Bewegung des Objekts 11a, b eine Bestimmung einer Geschwindigkeit des Objekts 11a, b umfasst. Dies kann einerseits eine Bestimmung eines Geschwindigkeitsbetrags 12a-d der Bewegung des Objekts 11a, b umfassen. In den Fig. 2b, und 2c ist ein solcher Geschwindigkeitsbetrag als Positionsabstand des jeweiligen Objekts 11a, b zu der jeweils vorherigen Aufnahme eingetragen. Alternativ oder zusätzlich kann die Bestimmung der Bewegung des Objekts 11a, b eine Bestimmung einer Bewegungsrichtung 13a-d der Bewegung des Objekts 11a, b umfasst, was ebenfalls beispielhaft in den Fig. 2b und 2c eingetragen ist.

Es ist auch bevorzugt vorgesehen, dass die Bestimmung der Bewegung des Objekts 11a, d eine Bestimmung einer Änderung der Geschwindigkeit des Objekts 11a, d in der Zeit umfasst. Dies kann ebenso eine Bestimmung der Änderung des Geschwindigkeitsbetrags 12a-d in der Zeit und alternativ oder zusätzlich Bestimmung einer Änderung der Bewegungsrichtung 13a-d in der Zeit umfassen. Wie aus den Fig. 2b und 2c hervorgeht, ändern sich beide diese Größen in dem dargestellten Ausführungsbeispiel für beide Objekte 11a, b.

Hier ist es bevorzugt, dass zur Bestimmung der Bewegung des Objekts 11a, b zeitlich nacheinander eine Vielzahl von Aufnahmen 14a-c des Erntegutstroms 6 erzeugt wird. Speziell zeigt die Fig. 2a eine erste solche Aufnahme 14a, die Fig. 2b eine zweite solche Aufnahme 14b und die Fig. 2c eine dritte solche Aufnahme 14c.

Gemäß einem bevorzugten Ausführungsbeispiel wird zur Bestimmung der Bewegung des Objekts 11a, b ein optisches Erkennungsmerkmal 15a, b des Objekts 11a, b bestimmt. Bei einem solchen optischen Erkennungsmerkmal 15a, b kann es sich um eine beliebige vorzugsweise optisch markante Teilstruktur des Objekts 11a, b handeln. Es ist dabei bevorzugt vorgesehen, dass das optische Erkennungsmerkmal in der Ansichtsperspektive eine Ausdehnung von 1,5 cm mal 1,5 cm hat. Es kann sich auch - wie hier beispielhaft der Fall - um das Objekt 11a, b insgesamt handeln. Vorzugsweise wird eine jeweilige Position des Erkennungsmerkmals 15a, b in der Vielzahl der Aufnahmen 14a-c bestimmt. Diese Position ist den Fig. 2a-c zwecks Übersichtlichkeit nicht gesondert eingetragen, aber jeweils an den eingetragenen Geschwindigkeitsbeträgen 12a-d und den Bewegungsrichtungen 13a-d der Objekte 11a, b zu erkennen.

Vorzugsweise wird das Objekt 11a, b in dem Erntegutstrom 6 basierend auf einem aufgefundenen optischen Erkennungsmerkmal 15a, b festgelegt. Es wird also gemäß dieser bevorzugten Variante nicht erst ein Objekt 11a, b bestimmt und dann ein entsprechendes optisches Erkennungsmerkmal 15a, b. Vielmehr wird zuerst ein solches optisches Erkennungsmerkmal 15a, b in dem erfassten Erntegutstrom 6 erfasst oder erkannt und dann das Objekt 11a, b als derjenige Bestandteil des Erntegutstroms 6 gesetzt, zu dem das optische Erkennungsmerkmal 15a, b gehört. In so einem Fall muss das vollständige Objekt 11a, b als solches weder vollständig bekannt sein noch optisch erfasst werden. Es reicht dann aus, dass die optische Erfassung nur das Erkennungsmerkmal 15a, b betrifft und der Rest des Objekts 11a, b in diesem Sinne "unsichtbar" bleibt. Da sich das Objekt 11a, b allerdings notwendigerweise mit dem Erkennungsmerkmal 15a, b mitbewegt, schränkt dies die Bestimmung der Bewegung des Objekts 11a, b nicht ein.

Hier ist es bevorzugt, dass zum Festlegen des Objekts 11a, b der erfasste Erntegutstrom 6 anhand eines Kriteriums zum Auffinden von optischen Erkennungsmerkmalen insbesondere im Wesentlichen vollständig untersucht wird. Es kann also der gesamte erfasste Erntegutstrom 6 auf optische Erkennungsmerkmale untersucht werden, wobei das Kriterium sich auf eine besonders kontrastreiche Kontur oder eine ungewöhnliche Ausprägung dieser Kontur beziehen kann. Es sind dies beides Eigenschaften, die das "Verfolgen" und "Wiedererkennen" des Erkennungsmerkmals 15a, b in den aufeinanderfolgenden Aufnahmen 14a-c erleichtern. Als Objekte 11a, b werden dann also diejenigen Bestandteile des Erntegutstroms 6 ausgewählt, deren jeweilige Bewegung anhand ihrer Erkennungsmerkmale 15a, b besonders gut zu bestimmen ist.

Eine weitere bevorzugte Ausführungsform sieht vor, dass die Bestimmung der Bewegung des Objekts 11a, b auf einer Entfernungsbestimmung der in der Vielzahl der Aufnahmen 14a-c jeweils bestimmten Position basiert. Dieser Zusammenhang ist oben bereits bei der Beschreibung und Darstellung des Geschwindigkeitsbetrags 12-d und der Bewegungsrichtung 13a-d vorgestellt worden. Basierend auf der Rate mit der die Aufnahmen 14a-c erstellt werden - also der Bildwiederholrate - und basierend auf der Geometrie und den Maßen desjenigen Bereichs, in dem der Erntegutstrom 6 erfasst wird - also des Erfassungsbereichs 6a - sowie in Abhängigkeit der entsprechenden Vorrichtung zur Erfassung des Erntegutstroms 6 kann einer Entfernung zwischen jeweiligen Positionen des Erkennungsmerkmals 15a, b in den Aufnahmen 14a-c eine entsprechende Bewegung bzw. ein Geschwindigkeitsbetrag 12a-d zugeordnet werden. Weiter vorzugsweise wird hier zur Entfernungsbestimmung eine Verschiebung eines dem Objekt 11a, b und insbesondere dem Erkennungsmerkmal 15a, b zugeordneten Bildpunkts - welcher auch als Pixel bezeichnet werden kann - zwischen der Vielzahl der Aufnahmen 14a-c bestimmt. Indem also lediglich die Verschiebung eines einzelnen Pixels des Erkennungsmerkmals 15a, b berechnet wird, reduziert sich der Rechenaufwand für diese Berechnung gegenüber der Betrachtung des Erkennungsmerkmals 15a, b oder gar des Objekts 11a, b insgesamt erheblich. Der somit gesparte Rechenaufwand ermöglicht vorteilhafterweise die Erhöhung der Bildwiederholrate oder die Verarbeitung von Aufnahmen 14a-c mit einer höheren Auflösung.

Es ist bevorzugt, dass eine Vielzahl von Objekten 11a, b und insbesondere von optischen Erkennungsmerkmalen 15a, b in dem erfassten Erntegutstrom 6 bestimmt wird. Eine solche Vielzahl von Erkennungsmerkmalen 15a, b kann anhand des obigen Kriteriums zum Auffinden von optischen Erkennungsmerkmalen bestimmt werden. Hier ist es denkbar, dass die Störung auch basierend auf einer Anzahl der bestimmten Erkennungsmerkmale 15a, b erkannt wird. Es geht also darum, dass bei der Anwendung eines solchen Kriteriums je nach Zustand des Erntegutstroms 6 eine größere oder eine kleinere Anzahl von solchen Erkennungsmerkmalen 15a, b bestimmt werden. Einerseits kann eine größere solche Anzahl erlauben, die Bewegung einer größeren Anzahl von Objekten 11a, b zu bestimmen, was insoweit eine breitere Grundlage zum Erkennen einer Störung der Erntegutbergungsanordnung 1 bietet. Andererseits kann auch der schiere Umstand, dass eine größere oder kleinere Anzahl der Erkennungsmerkmale 15a, b bestimmt wurde, einen eigenständigen Faktor bei der Erkennung einer solchen Störung bilden.

Ebenso kann es sein, dass die Störung auch basierend auf einer Veränderung der Anzahl der bestimmten Erkennungsmerkmale 15a, b in der Zeit erkannt wird.

Eine solche zeitliche Veränderung kann auch auf einem weiteren Weg in die Erkennung einer Störung hereinspielen. Und zwar kann es sein, dass für die Vielzahl von Erkennungsmerkmalen 15a, b eine Bewegung in der Zeit bestimmt wird. Dies kann auch genauer dadurch ausgedrückt werden, dass für die Vielzahl von Objekten 11a, b, zu denen die Vielzahl von Erkennungsmerkmalen 15a, b jeweils gehören, eine Bewegung in der Zeit bestimmt wird. Vorzugsweise wird in diesem Fall die Störung auch basierend auf der jeweils für die Vielzahl der Erkennungsmerkmale 15a, b bestimmten Bewegung erkannt wird. Und weiter kann es sein, dass die Störung auch basierend auf einer Varianz der jeweils für die Vielzahl der Erkennungsmerkmale 15a, b bestimmten Bewegung erkannt wird. Dabei ist hier der Begriff der "Varianz" nicht im engeren stochastischen Sinne zu verstehen, sondern im Sinne einer allgemeinen Unterschiedlichkeit. Es kann also ein Kriterium zum Erkennen einer Störung der Erntegutbergungsanordnung 1 sein, wie unterschiedlich untereinander die bestimmten Bewegungen der verschiedenen Erkennungsmerkmale 15a, b sind.

Bevorzugt ist es auch, dass die Bestimmung der Bewegung des Objekts 11a, b das zumindest teilweise Ermitteln eines optischen Flusses des erfassten Erntegutstroms 6 umfasst. Unter einem solchen optischen Fluss ist gemäß fachmännischem Verständnis das Vektorfeld der in die Bildebene projizierten Geschwindigkeit - hier entsprechend einer Verschiebung von Aufnahme zu Aufnahme - der sichtbaren Punkte des Objektraums zu verstehen. Ein solcher optischer Fluss beschreibt also die Bewegung einer ganzen Vielzahl von Objekten - vorzugsweise sogar im Wesentlichen von allen sichtbaren Objekten - in dem erfassten Erntegutstrom 6.

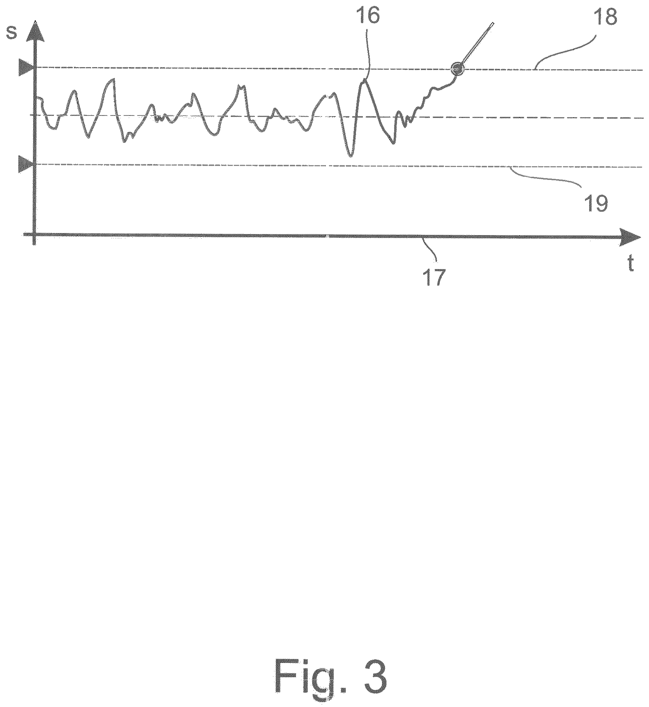

Eine bevorzugte Ausführungsform des vorschlagsgemäßen Verfahrens sieht vor, dass basierend auf der bestimmten Bewegung des Objekts 11a, b eine Geschwindigkeitseigenschaft des Erntegutstroms 6 ermittelt wird. Bei dieser Geschwindigkeitseigenschaft kann es sich beispielsweise um eine Durchschnittsgeschwindigkeit 16 des Erntegutstroms 6 handeln, wobei damit kein zeitlicher Durchschnitt gemeint ist, sondern vielmehr ein Durchschnitt der Geschwindigkeit verschiedener Teile des Erntegutstroms 6, z.B. von verschiedenen Objekten 11a, b, zu derselben Zeit. Eine solche Durchschnittsgeschwindigkeit 16 über einem Zeitverlauf 17 ist - gemeinsam mit einem oberen Grenzwert 18 und einem unteren Grenzwert 19, in der Fig. 3 dargestellt. Hier ist es weiter bevorzugt, dass basierend auf der ermittelten Geschwindigkeitseigenschaft des Erntegutstroms 6 ein Erntegutstau als Störung erkannt wird. Im Szenario der Fig. 3 kann also ein Erntegutstau als Störung in dem Augenblick erkannt werden, in dem die Durchschnittsgeschwindigkeit 16 den oberen Grenzwert 18 überschreitet. Eine bevorzugte Ausführungsform ist dann dadurch gekennzeichnet, dass bei Erkennen eines Erntegutstaus eine Verringerung eines Durchsatzes der Erntemaschine 2 ausgelöst wird. Auf diese Weise kann der sich anbahnende vollständige Erntegutstau aufgelöst werden, bevor es zu einer dauerhaften Blockade in der Erntegutbergungsanordnung 1 kommt. Es kann auch bei Unterschreiten des unteren Grenzwerts 19 eine - allerdings andere - Störung erkannt werden, welcher dann etwa mit einer Erhöhung des Durchsatzes der Erntemaschine 2 begegnet wird. Eine solche Störung kann etwa eine sogenannte Straußbildung sein. Sie geht regelmäßig mit einer hohen Anzahl von bestimmten Erkennungsmerkmalen 15a, b einher sowie damit, dass die jeweils für die Vielzahl der Erkennungsmerkmale 15a, b bestimmte Bewegung eine geringe Varianz aufweist.

Ein geringer bzw. zu geringer Fluss an Erntegut als Störung kann dadurch erkannt werden, dass eine niedrige Anzahl an Erkennungsmerkmalen 15a, b bestimmt wird. In diesem Fall weist die jeweils für diese Erkennungsmerkmale 15a, b bestimmte Bewegung regelmäßig auch eine geringe Varianz auf.

Bezüglich der Umsetzung des vorschlagsgemäßen Verfahrens ist es bevorzugt, dass zur Erfassung des Erntegutstroms 6 eine Erntegutkameraanordnung 20 an der Erntemaschine 2 angeordnet ist, was beispielhaft in der Fig. 1 dargestellt ist. Ebenso in der Fig. 1 ist die bevorzugte Ausgestaltung dargestellt, gemäß der die Erntegutkameraanordnung 6 zur Erfassung im Bereich zwischen einer Schneideanordnung - hier dem Messerbalken 8 - und einer Querförderanordnung - im vorliegenden Beispiel die Querförderschnecke 9 - der Erntegutbergungsanordnung 1 angeordnet ist. Dieser Bereich zur Erfassung ist am aufschlusskräftigsten bezüglich potenziell auftretender Störungen der Erntegutbergungsanordnung 1. Prinzipiell kann die Erntegutkameraanordnung 20 aus einer einzelnen Kamera bestehen, wobei diese dann aber einen vergleichsweise großen Blickwinkel erfassen muss. Bevorzugt ist es daher, dass - wie auch in der Fig. 1 dargestellt - die Erntegutkameraanordnung 20 eine Vielzahl von Kameravorrichtungen 21a, b zur im Wesentlichen nicht überlappenden Erfassung des Erntegutstroms 6 aufweist. Auf diese Weise werden sowohl die Verzerrung bei der Erfassung des Erntegutstroms 6 als auch die Anforderungen insbesondere an die Auflösung der Kameravorrichtungen 21a, b reduziert.

Eine bevorzugte Ausführungsform sieht vor, dass die Erntegutkameraanordnung 20 zur monochromen Erfassung des Erntegutstroms 6 eingerichtet ist. Mit anderen Worten unterscheidet die Erntegutkameraanordnung 20 nicht nach unterschiedlichen Farben, sondern sieht nur Helligkeitsunterschiede für jeden Bildpunkt vor. Insoweit ist jedem Bildpunkt also nur ein Helligkeitswert prinzipiell beliebiger Tiefe zugeordnet. Vorteilhaft hieran ist, dass für die hier relevante Analyse ohnehin im Wesentlichen nur die Helligkeitsunterschiede relevant sind, auf die Farbinformation also gut verzichtet werden kann und dadurch die Datenmenge - bezogen auf die Auflösung - geringer wird. Damit lassen sich gegenüber einem Farbbild höhere Auflösungen erreichen. Weiter ist es bevorzugt, dass die Erntegutkameraanordnung 20 zur monochromen Erfassung im Infrarotbereich eingerichtet ist. Als Infrarotbereich wird vorliegend der Wellenlängenbereich ab 800 nm verstanden. Speziell kann die Erntegutkameraanordnung 20 zur Erfassung im Bereich zwischen 800 nm und 900 nm und weiter insbesondere im Bereich zwischen 825 nm und 875 nm eingerichtet sein. Eine solche Bereichsbegrenzung kann auch durch einen Bandpassfilter in der Erntegutkameraanordnung 20 erreicht werden.

Ebenso ist es bevorzugt, dass eine Beleuchtung durch eine LED-Leuchtquelle zur Beleuchtung im Infrarotbereich bzw. in dem zur Erfassung vorgesehenen Wellenlängenbereich stattfindet. Diese Beleuchtung findet vorteilhafterweise aus Richtung der Erntegutkameraanordnung 20 statt. Die Beleuchtung kann bevorzugt räumlich gleichmäßig über den Beleuchtungsbereich bzw. über den Erfassungsbereich 6a erfolgen und kann vorzugsweise dynamisch basierend auf einer Umgebungslichtintensität angepasst werden.

Schließlich ist es bevorzugt, dass die Erntegutkameraanordnung 20 eine Bildwiederholrate zwischen 20 und 40 Bildern pro Sekunde aufweist. Die Erntegutkameraanordnung 20 kann auch eine Bildwiederholrate zwischen 25 und 35 Bildern pro Sekunde aufweisen. Es hat sich herausgestellt, dass - bezogen auf den zu erwartenden Geschwindigkeitsbereich des Erntegutstroms und die Dimensionen der Erntegutbergungsanordnung 1 - bei dieser Bildwiederholrate eine Verschiebung zwischen zwei Aufnahmen in einem mittleren Bereich an Bildpunkten - z. B. zwischen 25 und 15 Bildpunkten - zu erwarten ist, welcher sich für die hier gegenständliche Verarbeitung besonders anbietet.

### Bezugszeichenliste

- 1: Erntegutbergungsanordnung
- 1a: Schneidwerk
- 2: Erntemaschine
- 3: Mähdrescher
- 4: Gehäuse
- 5: Haspel
- 6: Erntegutstrom
- 6a: Erfassungsbereich
- 7: Halmteiler
- 8: Messerbalken
- 9: Querförderschnecke
- 10: Schrägförderer
- 11a,b: Objekte
- 12a-d: Geschwindigkeitsbetrag
- 13a-d: Bewegungsrichtung
- 14a-c: Aufnahmen
- 15a,b: Erkennungsmerkmale
- 16: Durchschnittsgeschwindigkeit
- 17: Zeitverlauf
- 18: oberer Grenzwert
- 19: unterer Grenzwert
- 20: Erntegutkameraanordnung
- 21a,b: Kameravorrichtungen

## Patentansprüche

1. Verfahren zum Erkennen von Störungen einer Erntegutbergungsanordnung (1), wobei ein Erntegutstrom (6) an der Erntegutbergungsanordnung (1) einer landwirtschaftlichen Erntemaschine (2) optisch erfasst wird, wobei in dem optisch erfassten Erntegutstrom (6) die Bewegung in der Zeit eines Objekts (11a, b) im Erntegutstrom (6) bestimmt wird und basierend auf der bestimmten Bewegung des Objekts (11a, b) eine Störung der Erntegutbergungsanordnung (1) erkannt wird, wobei basierend auf der bestimmten Bewegung des Objekts eine Geschwindigkeitseigenschaft, vorzugsweise eine Durchschnittsgeschwindigkeit (16), des Erntegutstroms (6) ermittelt wird und dass basierend auf der ermittelten Geschwindigkeitseigenschaft des Erntegutstroms (6) ein Erntegutstau als Störung erkannt wird, wobei die Bestimmung der Bewegung des Objekts (11a, b) eine Bestimmung einer Geschwindigkeit des Objekts (11a, b) umfasst, vorzugsweise, eine Bestimmung eines Geschwindigkeitsbetrags (12a-d) der Bewegung des Objekts (11a, b) und/oder eine Bestimmung einer Bewegungsrichtung (13a-d) der Bewegung des Objekts (11a, b) umfasst, **dadurch gekennzeichnet, dass** die Bestimmung der Bewegung des Objekts (11a, b) eine Bestimmung einer Änderung der Geschwindigkeit des Objekts (11a, b) in der Zeit umfasst, vorzugsweise eine Bestimmung der Änderung des Geschwindigkeitsbetrags (12a-d) in der Zeit und/oder eine Bestimmung einer Änderung der Bewegungsrichtung (13a-d) in der Zeit umfasst, und dass bei Erkennen eines Erntegutstaus eine Verringerung eines Durchsatzes der Erntemaschine (2) ausgelöst wird.

2. Verfahren nach Anspruch 1, **dadurch gekennzeichnet, dass** zur Bestimmung der Bewegung des Objekts (11a, b) zeitlich nacheinander eine Vielzahl von Aufnahmen (14a-c) des Erntegutstroms (6) erzeugt wird.

3. Verfahren nach einem der Ansprüche 1 bis 2, **dadurch gekennzeichnet, dass** zur Bestimmung der Bewegung des Objekts (11a, b) ein optisches Erkennungsmerkmal (15a, b) des Objekts (11a, b) bestimmt wird, vorzugsweise, dass eine jeweilige Position des Erkennungsmerkmals (15a, b) in der Vielzahl der Aufnahmen (14a-c) bestimmt wird.

4. Verfahren nach Anspruch 3, **dadurch gekennzeichnet, dass** das Objekt (11a, b) in dem Erntegutstrom (6) basierend auf einem aufgefundenen optischen Erkennungsmerkmal (15a, b) festgelegt wird.

5. Verfahren nach Anspruch 4, **dadurch gekennzeichnet, dass** zum Festlegen des Objekts (11a, b) der erfasste Erntegutstrom (6) anhand eines Kriteriums zum Auffinden von optischen Erkennungsmerkmalen insbesondere im Wesentlichen vollständig untersucht wird.

6. Verfahren nach einem der Ansprüche 2 bis 5, **dadurch gekennzeichnet, dass** die Bestimmung der Bewegung des Objekts (11a, b) auf einer Entfernungsbestimmung der in der Vielzahl der Aufnahmen (14a-c) jeweils bestimmten Position basiert, vorzugsweise, dass zur Entfernungsbestimmung eine Verschiebung eines dem Objekt (11a, b) , insbesondere dem Erkennungsmerkmal (15a, b) , zugeordneten Bildpunkts zwischen der Vielzahl der Aufnahmen (14a-c) bestimmt wird.

7. Verfahren nach einem der Ansprüche 3 bis 6, **dadurch gekennzeichnet, dass** eine Vielzahl von Objekten (11a, b), insbesondere von optischen Erkennungsmerkmalen (15a, b), in dem erfassten Erntegutstrom (6) bestimmt wird, vorzugsweise, dass die Vielzahl von Erkennungsmerkmalen (15a, b) anhand des Kriteriums zum Auffinden von optischen Erkennungsmerkmalen bestimmt wird, insbesondere, dass die Störung auch basierend auf einer Anzahl der bestimmten Erkennungsmerkmale (15a, b) erkannt wird.

8. Verfahren nach Anspruch 7, **dadurch gekennzeichnet, dass** die Störung auch basierend auf einer Veränderung der Anzahl der bestimmten Erkennungsmerkmale (15a, b) in der Zeit erkannt wird.

9. Verfahren nach Anspruch 7 oder 8, **dadurch gekennzeichnet, dass** für die Vielzahl von Erkennungsmerkmalen (15a, b) eine jeweilige Bewegung in der Zeit bestimmt wird, vorzugsweise, dass die Störung auch basierend auf der jeweils für die Vielzahl der Erkennungsmerkmale (15a, b) bestimmten Bewegung erkannt wird, insbesondere, dass die Störung auch basierend auf einer Varianz der jeweils für die Vielzahl der Erkennungsmerkmale (15a, b) bestimmten Bewegung erkannt wird.

10. Verfahren nach einem der Ansprüche 1 bis 9, **dadurch gekennzeichnet, dass** die Bestimmung der Bewegung des Objekts (11a, b) das zumindest teilweise Ermitteln eines optischen Flusses des erfassten Erntegutstroms (6) umfasst.

11. Verfahren nach einem der Ansprüche 1 bis 10, **dadurch gekennzeichnet, dass** zur Erfassung des Erntegutstroms (6) eine Erntegutkameraanordnung (20) an der Erntemaschine (2) angeordnet ist, insbesondere, dass die Erntegutkameraanordnung (20) zur Erfassung im Bereich zwischen einer Schneideanordnung und einer Querförderanordnung der Erntegutbergungsanordnung (1) angeordnet ist, vorzugsweise, dass die Erntegutkameraanordnung (20) eine Vielzahl von Kameravorrichtungen (21a, b) zur im Wesentlichen nichtüberlappenden Erfassung des Erntegutstroms (6) aufweist.

12. Verfahren nach Anspruch 11, **dadurch gekennzeichnet, dass** die Erntegutkameraanordnung (20) zur monochromen Erfassung des Erntegutstroms (6) eingerichtet ist, vorzugsweise, zur monochromen Erfassung im Infrarotbereich eingerichtet ist, insbesondere, dass die Erntegutkameraanordnung (20) eine Bildwiederholrate zwischen 20 und 40 Bildern pro Sekunde, weiter insbesondere zwischen 25 und 35 Bildern pro Sekunde, aufweist.

## Claims

1. Method for detecting disturbances of a crop collecting assembly (1),
wherein a crop flow (6) at the crop collecting assembly (1) of an agricultural harvesting machine (2) is optically recorded,
wherein the movement over time of an object (11a, b) in the crop flow (6) is determined in the optically recorded crop flow (6) and, on the basis of the determined movement of the object (11a, b), a disturbance of the crop collecting assembly (1) is detected, wherein, on the basis of the determined movement of the object, a speed property, preferably an average speed (16), of the crop flow (6) is ascertained, and wherein, on the basis of the ascertained speed property of the crop flow (6), a crop blockage is detected as a disturbance,
wherein the determination of the movement of the object (11a, b) comprises a determination of a speed of the object (11a, b), preferably a determination of an absolute speed (12a-d) of the movement of the object (11a, b) and/or a determination of a direction of movement (13a-d) of the movement of the object (11a, b), **characterized in that** the determination of the movement of the object (11a, b) comprises a determination of a change in the speed of the object (11a, b) over time, preferably a determination of the change in the absolute speed (12a-d) over time and/or a determination of a change in the direction of movement (13a-d) over time, and **in that**, when a crop blockage is detected, a reduction of a throughput of the harvesting machine (2) is initiated.

2. Method according to Claim 1, **characterized in that**, for the determination of the movement of the object (11a, b), a multiplicity of photos (14a-c) of the crop flow (6) are generated one after the other in time.

3. Method according to either of Claims 1 or 2, **characterized in that**, for the determination of the movement of the object (11a, b), an optical identifying feature (15a, b) of the object (11a, b) is determined, preferably **in that** a respective position of the identifying feature (15a, b) is determined in the multiplicity of photos (14a-c).

4. Method according to Claim 3, **characterized in that** the object (11a, b) is found in the crop flow (6) on the basis of a located optical identifying feature (15a, b).

5. Method according to Claim 4, **characterized in that**, for establishing the object (11a, b), the recorded crop flow (6) is investigated, in particular substantially completely, on the basis of a criterion for locating optical identifying features.

6. Method according to one of Claims 2 to 5, **characterized in that** the determination of the movement of the object (11a, b) is based on a distance determination of the position respectively determined in the multiplicity of photos (14a-c), preferably **in that**, for the distance determination, a displacement of an image point assigned to the object (11a, b), in particular the identifying feature (15a, b), between the multiplicity of photos (14a-c) is determined.

7. Method according to one of Claims 3 to 6, **characterized in that** a multiplicity of objects (11a, b), in particular optical identifying features (15a, b), in the recorded crop flow (6) is determined, preferably **in that** the multiplicity of identifying features (15a, b) is determined on the basis of the criterion for locating optical identifying features, in particular **in that** the disturbance is also detected on the basis of a number of determined identifying features (15a, b).

8. Method according to Claim 7, **characterized in that** the disturbance is also detected on the basis of a change in the number of determined identifying features (15a, b) over time.

9. Method according to Claim 7 or 8, **characterized in that**, for the multiplicity of identifying features (15a, b), a respective movement over time is determined, preferably **in that** the disturbance is also detected on the basis of the movement respectively determined for the multiplicity of identifying features (15a, b), in particular **in that** the disturbance is also detected on the basis of a variance in the movement determined respectively for the multiplicity of identifying features (15a, b).

10. Method according to one of Claims 1 to 9, **characterized in that** the determination of the movement of the object (11a, b) includes the at least partial ascertainment of an optical flow of the recorded crop flow (6).

11. Method according to one of Claims 1 to 10, **characterized in that**, for the recording of the crop flow (6), a crop camera assembly (20) is arranged on the harvesting machine (2), in particular **in that** the crop camera assembly (20) is arranged for recording in the area between a cutting assembly and a cross-conveying assembly of the crop collecting assembly (1), preferably in that the crop camera assembly (20) has a multiplicity of camera devices (21a, b) for the substantially nonoverlapping recording of the crop flow (6).

12. Method according to Claim 11, **characterized in that** the crop camera assembly (20) is designed for monochromatic recording of the crop flow (6), preferably for monochromatic recording in the infrared range, in particular **in that** the crop camera assembly (20) has an image refresh rate of between 20 and 40 images per second, more particularly between 25 and 35 images per second.

## Revendications

1. Procédé de reconnaissance de dysfonctionnements d'un arrangement de récupération de produit de récolte (1),
un flux de produit de récolte (6) étant détecté optiquement au niveau de l'arrangement de récupération de récolte (1) d'une machine de récolte (2) agricole,
le mouvement dans le temps d'un objet (11a, b) dans le flux de produit de récolte (6) étant déterminé dans le flux de produit de récolte (6) détecté optiquement et un dysfonctionnement de l'arrangement de récupération de produit de récolte (1) étant reconnu sur la base du mouvement déterminé de l'objet (11a, b), une propriété de vitesse, de préférence une vitesse moyenne (16), du flux de produit de récolte (6) étant identifiée sur la base du mouvement déterminé de l'objet et un bourrage de produit de récolte étant reconnu en tant que dysfonctionnement sur la base de la propriété de vitesse identifiée du flux de produit de récolte (6),
la détermination du mouvement de l'objet (11a, b) comprenant une détermination d'une vitesse de l'objet (11a, b), comprenant de préférence une détermination d'une valeur absolue de vitesse (12a-d) du mouvement de l'objet (11a, b) et/ou une détermination d'une direction de mouvement (13a-d) du mouvement de l'objet (11a, b), **caractérisé en ce que** la détermination du mouvement de l'objet (11a, b) comprend une détermination d'une modification de la vitesse de l'objet (11a, b) dans le temps, comprend de préférence une détermination de la modification de la valeur absolue de la vitesse (12a-d) dans le temps et/ou une détermination d'une modification de la direction du mouvement (13a-d) dans le temps, et **en ce qu'**en cas de reconnaissance d'un bourrage de produit de récolte, une réduction du débit de la machine de récolte (2) est déclenchée.

2. Procédé selon la revendication 1, **caractérisé en ce que** pour déterminer le mouvement de l'objet (11a, b), une pluralité d'enregistrements (14a-c) du flux de produit de récolte (6) sont générés successivement dans le temps.

3. Procédé selon l'une des revendications 1 à 2, **caractérisé en ce que** pour déterminer le mouvement de l'objet (11a, b), une caractéristique de reconnaissance optique (15a, b) de l'objet (11a, b) est déterminée, de préférence **en ce qu'**une position respective de la caractéristique de reconnaissance (15a, b) est déterminée dans la pluralité d'enregistrements (14a-c).

4. Procédé selon la revendication 3, **caractérisé en ce que** l'objet (11a, b) est défini dans le flux de produit de récolte (6) sur la base d'une caractéristique de reconnaissance (15a, b) optique trouvée.

5. Procédé selon la revendication 4, **caractérisé en ce que** pour définir l'objet (11a, b), le flux de produit de récolte (6) détecté est examiné, en particulier pour l'essentiel entièrement, à l'aide d'un critère de recherche de caractéristiques de reconnaissance optiques.

6. Procédé selon l'une des revendications 2 à 5, **caractérisé en ce que** la détermination du mouvement de l'objet (11a, b) est basée sur une détermination de distance de la position respectivement déterminée dans la pluralité d'enregistrements (14a-c), de préférence **en ce qu'**un décalage d'un point d'image associé à l'objet (11a, b), en particulier de la caractéristique de reconnaissance (15a, b), entre la pluralité d'enregistrements (14a-c) est déterminé en vue de déterminer la distance.

7. Procédé selon l'une des revendications 3 à 6, **caractérisé en ce qu'**une pluralité d'objets (11a, b), en particulier de caractéristiques de reconnaissance (15a, b) optiques, sont déterminés dans le flux de produit de récolte (6) détecté, de préférence **en ce que** la pluralité de caractéristiques de reconnaissance (15a, b) sont déterminées à l'aide du critère de recherche de caractéristiques de reconnaissance optiques, notamment en ce que le dysfonctionnement est également reconnu sur la base d'un certain nombre de caractéristiques de reconnaissance (15a, b) déterminées.

8. Procédé selon la revendication 7, **caractérisé en ce que** le dysfonctionnement est également reconnu sur la base d'une modification dans le temps du nombre de caractéristiques de reconnaissance (15a, b) déterminées.

9. Procédé selon la revendication 7 ou 8, **caractérisé en ce que** pour la pluralité de caractéristiques de reconnaissance (15a, b), un mouvement dans le temps respectif est déterminé, de préférence **en ce que** le dysfonctionnement est également reconnu sur la base du mouvement déterminé respectivement pour la pluralité de caractéristiques de reconnaissance (15a, b), notamment en ce que le dysfonctionnement est également reconnu sur la base d'une variance du mouvement respectivement déterminé pour la pluralité de caractéristiques de reconnaissance (15a, b).

10. Procédé selon l'une des revendications 1 à 9, **caractérisé en ce que** la détermination du mouvement de l'objet (11a, b) comprend l'identification au moins partielle d'un flux optique du flux de produit de récolte (6) détecté.

11. Procédé selon l'une des revendications 1 à 10, **caractérisé en ce qu'**un arrangement de caméra de produit de récolte (20) est disposé sur la machine de récolte (2) pour détecter le flux de produit de récolte (20), en particulier **en ce que** l'arrangement de caméra de produit de récolte (6) est disposé en vue de détecter dans la zone entre un arrangement de coupe et un arrangement de transport transversal de l'arrangement de récupération de récolte (1), de préférence **en ce que** l'arrangement de caméra de produit de récolte (20) comprend une pluralité de dispositifs de caméra (21a, b) pour une détection sensiblement sans chevauchement du flux de produit de récolte (6).

12. Procédé selon la revendication 11, **caractérisé en ce que** l'arrangement de caméra de récolte (20) est conçu pour la détection monochrome du flux de produit de récolte (6), de préférence pour la détection monochrome dans le domaine infrarouge, en particulier **en ce que** l'arrangement de caméra de récolte (20) présente une fréquence de répétition d'image comprise entre 20 et 40 images par seconde, en particulier entre 25 et 35 images par seconde.
